# EUROPEAN PATENT APPLICATION

(11) **EP 0 688 731 A1**
(43) Date of publication of application: **27.12.1995**
(21) Application number: 95830245.7
(22) Date of filing: 14.06.1995
(51) Int. Cl.: B65G 59/06

(54) **Improved escapement mechanism for high speed single dispensing of blister packs, strips, and the like**

(30) Priority: 23.06.1994 IT BO940116 U
(71) Applicant: O.A.M. S.p.A., 40067 Rastignano (Bologna) (IT)
(72) Inventor: Martelli, Antonio, Bologna (IT)
(74) Representative: Dall'Olio, Giancarlo

(57) **Abstract**

The escapement mechanism for dispensing of blister packs, strips and similar, includes four pairs of supports, respectively lower (10) and upper (110), made of curved arms situated at its bottom. These supports oscillate intermittently and in mutual time relation, on respective pins (51,61) between a forward and a retracted position to release, one by one, packs from a stack (4) held in the magazine (2). The supports (10,110) are connected, via driving means (50,60), to rotating means (30) for position control. The means (30) include a pair of discs (31,32), operated by step motors (41,42), and define a cyclic sequence of characteristic positions for the supports (10,110).

## Description

The present invention relates to packaging of articles in blister packs, strips or the like, that can be used particularly for packaging medicines or confectionery.

In particular, the present invention concerns an escapement device that divides blister packs or strips according to a given number requested for each package.

It is known that tablets and the like are sold in blister packs, strips or similar.

A blister pack is obtained from a plastic material sheet, in which regular blisters for housing the products are made; after filling, the blisters are closed by means of a sheet of aluminium.

A strip is instead obtained from two sheets of aluminium, arranged one on the other, between which the product is encapsulated.

Both blister pack and strip are made in continuous band and subsequently cut in units of suitable size. In the first step, when storable products are packaged, a sufficient number of packs necessary to form a package, is withdrawn from a special magazine, in which they are stored in a stack.

Then, the blister packs are brought to the subsequent packing stations, by conveying means, usually a belt or a box conveyor.

Some known packs separation devices feature withdrawing means formed by separating bars or pushers, that operate near the magazines and withdraw a certain number of packs therefrom.

The drawbacks of these separation devices result from the lack of precision in the packs placing, the risk of withdrawing a wrong number of packs, and difficult change of number of packs to be withdrawn.

Moreover, these devices are not completely suitable for high working speed of present packaging machines.

In particular, a known device, described in the Patent No. 1105891, permits to work at high speeds due to an escapement mechanism that withdraws the blister packs or strips.

The above mentioned device has three coplanar rests, situated under the magazine where the stacked packs are stored.

Each of the rests includes two supports, upper and lower respectively, that oscillate intermittently in mutual phase relation and are controlled by suitable driving means.

In a first position, the upper supports hold the lowermost pack of the stack, in a second position these supports are withdrawn so as to allow the same pack to fall on the lower supports, in a third position the upper supports are moved again to hold the lowermost pack, and finally, in a fourth position, the lower supports are withdrawn so as to allow the pack held thereby to fall on the belt conveyor means.

The aforementioned supports driving means include electromagnets, fixed to the lower part of the magazine and controlled by a control processing unit.

The above described device, although carrying out the functions for which it has been designed, brings about a series of disadvantages resulting from its constructive features.

First of all, the continuous clicks of the electromagnets activation and deactivation produce constant noise that, due to a high activation frequency, is very irritating for the persons working around.

Moreover, since the supports are close one to another, some electromagnets, due to their big dimensions, must be situated far from the respective supports and connected by link extensions thereto, that provokes increasing of the device constructive complexity and higher possibility of damage for the device.

The object of the present invention is to provide an escapement mechanism for dispensing blister packs, strips and the like, one by one, without the above described disadvantages, but rather maintaining high productivity and good performance and ensuring large margins for improvement thereof.

In fact, the present device eliminates limitations resulting from the maximum activation frequencies of the electromagnets.

The above mentioned objects are achieved in accordance with the contents of claims.

The characteristic features of the present invention are pointed out in the following description with reference to the enclosed drawings, in which:
- figure 1 shows a schematic side view of an escapement device for separation of blister packs, made according to the present invention;
- figure 2 shows the same device seen from above;
- figures 3a, 3b, 3c, and 3d show schematic views of the above mentioned device in a sequence of typical working positions.

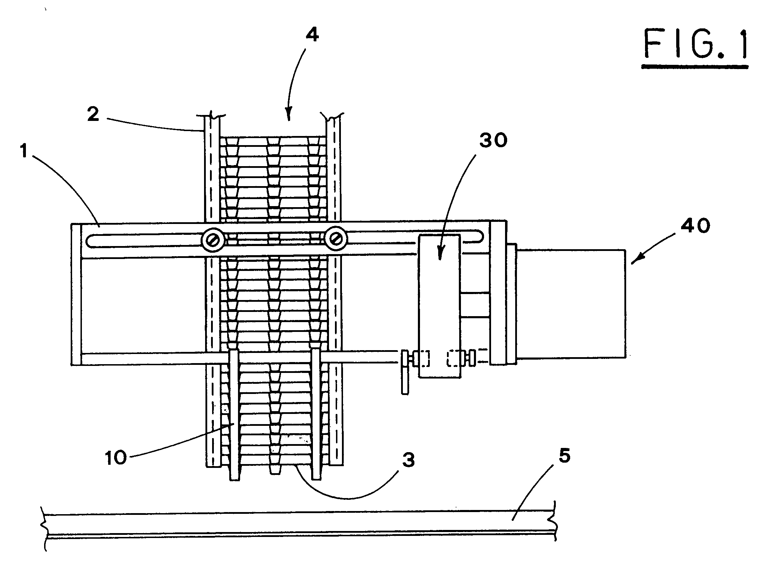

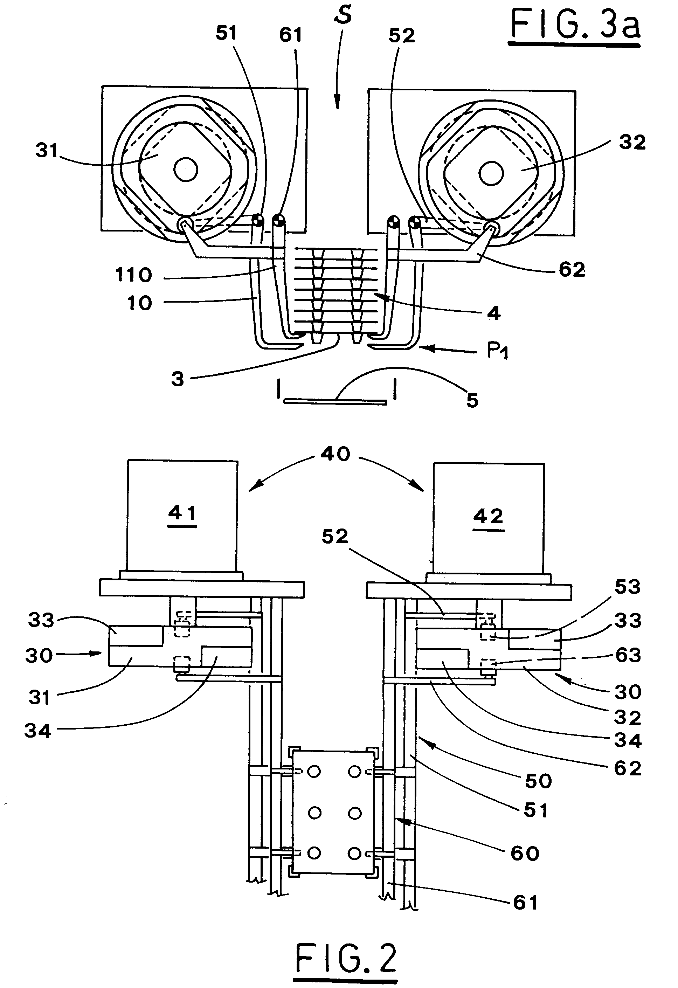

With reference to the figures 1,2, a frame 1, made of e.g. metal, supports a vertical magazine 2 that contains a stack 4 of blister packs, strips or the like.

These products will be called "packs" hereinafter. The escapement device, being the subject of the present invention, has two sections, arranged specular to each other with respect to a vertical symmetry plane.

Only one of the two sections is described, and, if not stated differently, all that is said is valid also for the other section, specular to the one described.

The magazine 2 substantially includes four angle bars, arranged according to the corners of a quadrilateral having the same dimensions as the packets.

Four pairs of coplanar supports, placed according to the corners of a quadrilateral, hold the stack 4 from below.

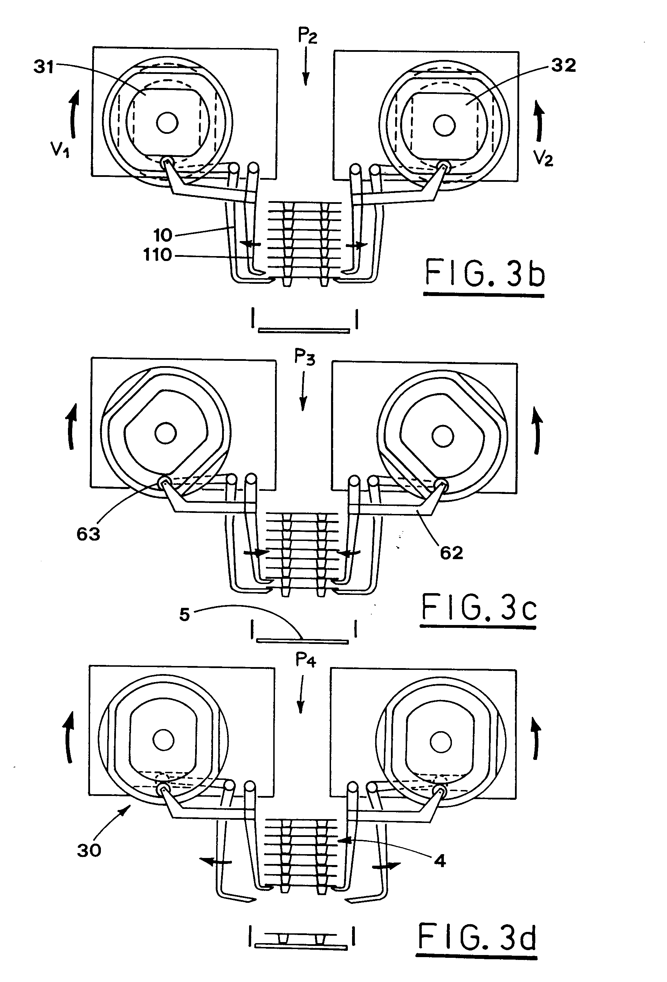

Each pair has a lower support 10 and an upper support 110 (see figure 3d). These supports are formed by arms, substantially vertical and curved toward the stack 4 in their lower parts.

The vertical distance between the lower end of a lower support 10 and the lower end of the upper support 110 is smaller than the distance between the two consecutive packs of the stack 4.

The arms can also oscillate intermittently, and in mutual time relation, between a forward position and a retracted position, so as to hold the lowermost pack 3 of the stack 4, or to release it and put it on the conveyor means 5, formed by e.g. conveying belt, situated below.

The upper end of each support 10, 110 is rigidly bound to respective driving means 50, 60 (fig. 2).

The driving means 50, 60 include two pairs of pins, first 51, and second 61, rotatably supported by the frame 1, so that they are longitudinal and parallel to the symmetry plane S.

The lower supports 10 are bound to the first pair of pins 51, while the upper supports 110 are bound to the second pair of pins 61.

These pins have arms 52, 62 that feature idling rollers 53, 63 at their free ends.

The rollers 53, 63 engage rotating means for position control 30, in order to define, together with the same means 30, a series of characteristic positions for the said supports 10.

This series includes, in sequence:
a position P₁, in which the upper supports 110 are moved forward and hold the lowermost pack 3 of the stack 4 (figure 3a);
a position P₂, in which the same supports 110 are retracted, while the lower supports 10 are moved forward and hold the pack 3 (figure 3b);
a position P₃, in which the upper supports 110 are again moved forward so as to hold the second-lowest pack of the stack 4 (figure 3c);
a position P₄, in which the lower supports are withdrawn so as to release the lowermost pack (figure 3d).

The above mentioned position control means 30 include a pair of discs 31, 32, situated sidewise and symmetrical to the magazine 2, so that their axes are parallel to the axes of the pins 51, 61. The discs 31,32 are rotated by motor means 41, 42.

Each of the discs 31, 32 features, on both its lateral surfaces, cam grooves 33, 34 with a closed loop path, which guide the said rollers 53, 63.

The cam grooves 33, 34 shape is suitably defined, so as to impose to the supports 10, 110 the characteristic, above described positions.

The motor means 41, 42 include a pair of step motors, axially fastened to the discs 31, 32 and controlled by an electronic processing unit, that is not illustrated since known.

Operation of the escapement mechanism is described, beginning from the characteristic position P₁, shown in figure 3a.

In this position, both lower supports 10 and upper supports 110 are moved forward and the upper supports 110 hold the stack 4.

Rotation of the discs 31, 32 in respective directions V₁ and V₂ keeps steady the position of the lower supports 10 and carries, progressively and synchronously, the upper supports 110 to their retracted position (characteristic position P₂ shown in figure 3b).

The stack 4 is thus released by the upper supports 110 and held by the lower supports 10.

Then, the upper supports 110 are again moved to the position P₃, until they go to hold the second-lowest pack of the stack 4 (figure 3c).

Subsequently, the lower supports 10 are retracted and the pack 3, held thereby, is released (position P₄, figure 3d), and falls on the belt conveyor under the action of gravity.

Finally, rotation of the discs 31, 32 make the supports to assume again the position P1 in order to begin a new cycle.

It is to be pointed out that, depending on the shape of the cam grooves 33, 34, this cycle can be completed during one full rotation of the discs 31, 32, or, advantageously, during a part of this rotation.

This allows to obtain higher release speeds of the packs, without increasing excessively rotation speed of the same discs.

Further advantages of the present invention result from the simple construction, strength and performances of the device, together with extremely low noise level during operation.

This is particularly important, since operators and other people usually work around the escapement device and other devices of the same type.

## Claims

1. Escapement mechanism for high speed dispensing of blister packs, strips and the like, comprising:
a frame structure (1), fixed movably to a magazine (2) containing a plurality of packs (3) arranged in a stack (4);
a plurality of pairs of supports (10,110), each of which including a lower support (10) and an upper support (110), bound to respective driving means (50,60) and operating in mutual time relation cyclically assuming a series of characteristic positions, comprising in sequence a position (P₁), in which the upper supports (110) are moved forward and hold the pack (3), a position (P₂), in which the same supports are withdrawn, while the lower supports (10) are moved forward and hold the same pack, a position (P₃), in which the upper supports (110) are again moved forward so as to hold the second-lowest pack of the stack (4) and a position (P₄), in which the lower supports (10) are retracted, so as to release intermittently the lowermost pack (3) of the stack (4) and put it on conveyor means (5);
said mechanism being characterised in that it includes rotating means for position control (30), aimed at defining, in every moment, together with the said driving means (50,60), relative positioning of the said supports (10,110) and there are also provided motor means (40), rigidly connected with the said position control means (30) and aimed at moving the said control means (30) according to predetermined timings.

2. Escapement mechanism according to claim 1, characterised in that the said pairs of supports substantially include vertical arms, respectively lower (10) and upper (110), having their upper ends fixed to respective driving means (50,60), and having their lower parts curved toward the stack (4) of the packs, so as to held the said stack from below.

3. Escapement mechanism according to claim 1, characterised in that the said driving means (50,60) include pairs of pins, respectively lower (51) and upper (61), rotatably fixed to the frame (1) and equipped with arms (52,62) provided with idling rollers (53,63) at their ends aimed at engaging the said rotating position control means (30).

4. Escapement mechanism according to claim 1, characterised in that there are four pairs of coplanar supports (10,110), arranged according to the corners of a quadrilateral.

5. Escapement mechanism according to claim 1, characterised in that the said rotating means for position control (30) include a pair of discs (31,32), arranged sidewise symmetrical with respect to the magazine (2), each of said discs featuring cam grooves (33,34), with suitably defined shape, in both its surfaces.

6. Escapement mechanism according to claim 1, characterised in that the said motor means (40) include a pair of step motors (41,42).
